# EUROPEAN PATENT SPECIFICATION

(11) **EP 2 195 996 B1**
(45) Date of publication and mention of the grant of the patent: **24.02.2016**
(21) Application number: 08786901.2
(22) Date of filing: 05.08.2008
(51) Int. Cl.: H04L 29/06

(54) **METHOD, SYSTEM AND COMPUTER PROGRAM FOR BALANCING THE ACCESS TO SHARED RESOURCES WITH CREDIT-BASED TOKENS**
VERFAHREN, SYSTEM UND COMPUTERPROGRAMM ZUM AUSGLEICHEN DES ZUGRIFFS AUF GEMEINSAM BENUTZTE BETRIEBSMITTEL MIT AUF KREDIT BASIERENDEN TOKEN
PROCÉDÉ, SYSTÈME ET PROGRAMME INFORMATIQUE POUR ÉQUILIBRER L'ACCÈS AUX RESSOURCES PARTAGÉES PAR DES JETONS À BASE DE CRÉDIT

(30) Priority: 14.09.2007 EP 07116398
(43) Date of publication of application: 16.06.2010
(73) Proprietor: International Business Machines Corporation, Armonk, New York 10504 (US)
(72) Inventor: GUARDA, Roberto, I-00040 Pomezia (IT); CASTELLUCCI, Antonio, Roma RM 00144 (IT)
(74) Representative: Klett, Peter Michael
(86) International application number: PCT/EP2008/060293
(87) International publication number: WO 2009/033893

(56) References cited:
- EP-A- 1 176 766
- EP-A- 1 612 674
- US-A1- 2003 156 218
- US-A1- 2007 129 079
- US-B1- 6 434 559
- US-B1- 6 477 373

## Description

### Technical Field

The present invention relates to the data processing field. More specifically, the present invention relates to the access to shared resources in a data processing system.

### Background

Shared resources are commonplace in modern data processing systems. Generally speaking, a shared resource consists of any (logical and/or physical) component, which can be accessed by multiple exploiters in turn. An example of shared resource is a server computer (or simply server), which offers a corresponding service to a large number of users accessing the server by means of their client computers (or simply clients). A typical application of the above-described client/server structure is in the SOA (Service Oriented Architecture) environment - for example, for the implementation of services of the DAM (Digital Asset Management) type.

Some available services are free of charge; however, the exploitation of most of the services is subject to some sort of payment by the users.

Particularly, as described in US-A-2003/0028653, a prepaid credit may be associated with each user; in this way, the user is authorized to exploit specific services until his/her credit exhausts. This document proposes a security improvement based on the use of an encrypted token, which stores authentication information (about the user and the client), authorization information (about a granted level of access), and accounting information (about the credit and a sum already spent); for example, the token may be stored on a smart card that is provided to the user. The token is transmitted to the server whenever the user desires to access an application provided by it. The server decrypts the token, and uses the extracted information to verify his/her identity, authorization, and residual credit; if the result of the above-mentioned verification is positive, the user is allowed to access the desired application. The server then monitors the access to the application by the user; when the residual credit exhausts, the server warns the user accordingly - so that s/he can save the work in progress and exit the application, or obtain further credit to continue accessing the application.

The concept of credits is also exploited in US-A-2006/0271692 to control the execution of commands that are submitted to the server. For this purpose, the credits are represented by a set of numbers; each submitted command includes one of those numbers, so that it is processed only if the number is within a valid window and it has not been already used. In this way, the serve can manage the credits dynamically (by enlarging or shrinking the valid window); moreover, the impossibility of reusing the same number allows preventing flooding attacks to the server.

Similar tokens may also be used for further purposes.

For example, US-B-6715082 proposes storing credentials of different users on the server; a token is then associated with each credential, so as to avoid its re-rending by the user.

Moreover, in US-B-7028090 a token is issued to each user after his/her validation; the token stores specific permissions that have been granted to the user for a limited time.

At the end, US-B-6065117 discloses the use of tokens for retrieving state information on the server about corresponding clients.

In any case, a problem of the servers (and more generally of any shared resources) is that they are intrinsically limited. For example, the users that are allowed to exploit each service concurrently cannot exceed a predefined maximum number. This limitation may be due to either objective or subjective constraints. Indeed, the processing capability of the server defines the number of working sessions that can be established (between the server and the clients) for exploiting the service. In addition or in alternative, the number of concurrent users may be reduced to ensure an adequate level of quality of the service, or according to specific license agreements (for example, relating the cost of the service to the number of concurrent users). In this respect, a time-out mechanism (wherein each session is automatically closed when an inactivity time of the corresponding user reaches a predefined threshold) is typically implemented to avoid keeping the server busy with useless sessions. In any case, however, after reaching the maximum number of concurrent users any request for exploiting the service by a new user is refused.

This strongly limits the availability of the server; the problem is particular acute in services (such as of the DAM type), which should guarantee their exploitation to the largest possible number of different users in any situation (for example, even in the case of a peak of requests). It should be noted that the above-mentioned need is often to be balanced with the opposed requirement of avoiding an excessive overload of the server. For example, this happens when each session maintains context information of the corresponding user; typically, the context information is collected by means of a complex handshaking procedure (for validating and authorizing the user). Therefore, the context information (being lost when the session is closed) should be recollected whenever the same user submits a further request that is processed by another session.

The patent application US 2007/0129079 discloses a method to allocate release of channels in a network when there is no more channel available. Assuming a first call is established between mobile phones, in case a second call is entering, if there is no more channel available and the second call has a higher priority, the first call is interrupted and the second call is established. The priority may be based on allocation time for the call. This method provides a method for managing shared resources here the channels on a same cell. However this method does not apply to management of shared resources in SOA environment as the service requests cannot be interrupted even after a warning as it is optionally proposed in the solution of this prior art. There is thus still a need to define a method to manage shared resources when receiving service requests.

The US patent US 6434559 discloses a method for management of critical resources accessed by end users on a computer. critical resource management method for resources accessed and shared by end users on a computer. The method consists, when the computer has detected that the shared resource is in a critical situation, to release the resource (or to deny a new access to the resource) for the end user having the lowest difference between the number of resource units he paid for a given period of time and the real number of resource units he has used during the last period of time. For each user using the shared resource, the method thus comprises the steps of storing the resource units the end user has paid for during the last period of time and monitoring the real number of resource units he is using. This method offers a fair treatment to end users as it takes into account the amount paid by the end user to access the resource as well as the amount of units already used for this resource by the end user. However, these disconnections are not acceptable when the resource is a server which should warrantee that the service the server offers is exploitable by a maximum of clients. There is a need for a solution which allows releasing connection resources (which are limited) to accept connection of new clients to the service but which, at the same time, avoids to have to reconnect which takes time for the client and overloads the server.

### Summary

In its general terms, the present disclosure is based on the idea of defining a limited privileged use of a shared resource (for example, in the form of a credit reducing over time) for forcing the release of its accesses.

Particularly, different aspects of the present invention provide a solution as set out in the independent claims. Advantageous embodiments of the invention are described in the dependent claims. More specifically, an aspect of the invention proposes a method for accessing a shared resource in a data processing system (such as a service) by a plurality of exploiter entities (such as clients). The method starts with the step of associating a privilege limit for a privileged use of the shared resource with each one of a set of active entities (such as in the form of a credit). A use indicator is measured for each active entity; the use indicator is indicative of an actual use of the shared resource by the active entity (such as defined by the number of times it has received a desired response). The method continues by receiving an access request for an access to the shared resource by a new one of the active entities. The method detects a critical condition of the shared resource (such as when no handle for exploiting the service is available). The access granted to at least one of a set of enabled entities - currently accessing the shared resource - is released; this happens in response to the access request in the critical condition with the use indicator of the new active entity that does not reach the privilege limit. The access is then granted to the new active entity.

Typically, the method finds application after reaching a maximum number of accesses that is allowed concurrently to the shared resource.

Preferably, the access to be released is selected as the one having the corresponding use indicator closest to the privilege limit (for example, with the lowest credit).

As a further improvement, the forced release of the accesses is conditioned (for example, according to an activity of the corresponding entities).

The proposed solution may be implemented in a system with client/server architecture (wherein a handle of a working session is allocated for each access).

Typically, context information is associated with each handle (such as in a stateful application).

As a further improvement, each handle is released when an inactivity indicator of the corresponding client reaches a threshold (i.e., a time-out).

In this case, the forced release of the accesses may be restricted to the clients whose inactivity indicators exceed another threshold (preceding the above-mentioned one).

An implementation of the invention is based on the use of a token (for authorizing the access to the corresponding client); the token is associated with a profile for saving the context information of the client among different sessions.

A way to further improve the solution is of allocating a handle (if possible) at the creation of each token.

Preferably, each token is released after the reaching of a use limit (such as another time-out).

A further aspect of the invention proposes a corresponding service.

Another aspect of the invention proposes a computer program for performing the above-described method.

A different aspect of the invention proposes a corresponding system.

### Brief description of the drawings

The invention itself, as well as further features and the advantages thereof, will be best understood with reference to the following detailed description, given purely by way of a non-restrictive indication, to be read in conjunction with the accompanying drawings, in which:
FIG.1 is a schematic block diagram of a data processing system in which the solution according to an embodiment of the invention may be applied,
FIGs.2-3 are explanatory time diagrams of an exemplary scenario relating to the application of the solution according to an embodiment of the invention,
FIG.4 shows the main software components that can be used to implement the solution according to an embodiment of the invention, and
FIGs.5A-5B show a diagram describing the flow of activities relating to an implementation of the solution according to an embodiment of the invention.

### Detailed Description

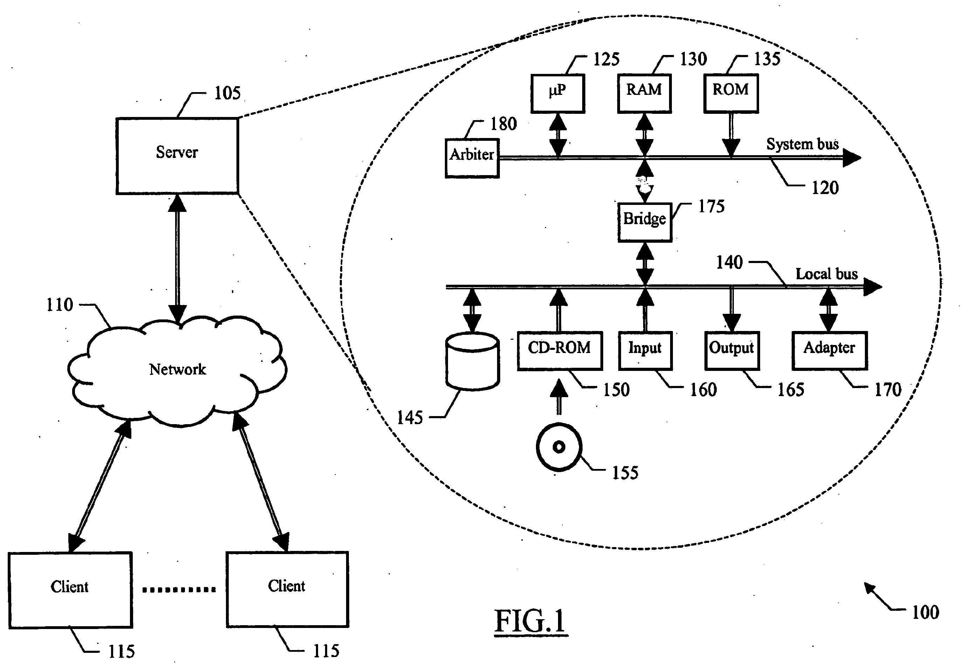

With reference in particular to FIG.1, a distributed data processing system 100 is illustrated. The system 100 has client/server architecture, typically based on the Internet. The Internet consists of millions of servers 105 (only one shown in the figure), which are interconnected through a global communication network 110. Each server 105 offers one or more services. Users of clients 115 access the server 105 (through computers - not shown in the figure - operating as access providers for the Internet), in order to exploit the offered services.

For example, the services conform to the SOA specification. In this case, each service consists of a stand-alone basic task, which may be invoked through a well-defined interface independent of its underlying implementation; the SOA environment is intrinsically stateless, meaning that every invocation of the service is self-contained (without any knowledge of the previous processing). The services may be of the DAM type - supporting the acquisition, storage and retrieval of digital assets (such as photographs, videos, music, and the like). For example, each service may be implemented with a legacy application that is wrapped to work in the SOA environment. The legacy application may instead be stateful, meaning that context information of each user is maintained for different processing. Typically, the context information includes personal data (relating to the user and/or the corresponding client) and status data (relating to a current progress of the processing). Generally, the personal data is collected by means of a handshaking procedure, which allows verifying the identity of the user and his/her authorization to exploit the desired service.

Particularly, the server 105 consists of a computer that is formed by several units that are connected in parallel to a system bus 120. In detail, one or more microprocessors (*µ*P) 125 control operation of the server 105; a RAM 130 is directly used as a working memory by the microprocessors 125, and a ROM 135 stores basic code for a bootstrap of the server 105. Several peripheral units are clustered around a local bus 140 (by means of respective interfaces). Particularly, a mass memory consists of one or more hard-disks 145 and drives 150 for reading CD-ROMs 155. Moreover, the server 105 includes input units 160 (for example, a keyboard and a mouse), and output units 165 (for example, a monitor and a printer). An adapter 170 is used to connect the server 105 to the network 110. A bridge unit 175 interfaces the system bus 120 with the local bus 140. Each microprocessor 125 and the bridge unit 175 can operate as master agents requesting an access to the system bus 120 for transmitting information. An arbiter 180 manages the granting of the access with mutual exclusion to the system bus 120.

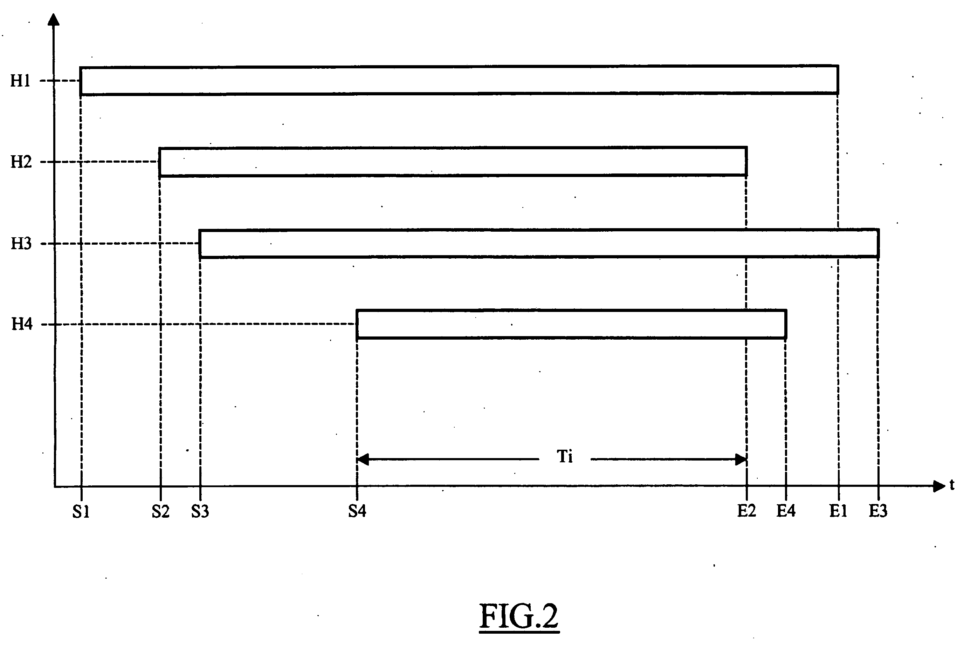

An exemplary scenario relating to an activity over time (t) of generic users accessing the above-mentioned server is illustrated in FIG.2. For each (enabled) user currently exploiting a service offered by the server, a corresponding working session is established with the allocation of a connection handle, which is used to access the context information of the user. The user interacts with the server by submitting a series of service requests (for example, to upload, search or download specific digital assets). The server processes each service request (by exploiting the context information of the user, which is then updated accordingly); for example, this involves storing uploaded digital assets, searching available digital assets, or retrieving required digital assets (charging the user for every performed operation). The server then returns a corresponding response to the user; typically, the response consists of a return code of the uploading, a list of the digital assets satisfying the desired search, or the selected digital assets. The handle is released - with the corresponding context information that is discarded - when the user or the server closes the session (for example, after the user has obtained all the desired information or an expense limit has been reached). In any case, the handle is released automatically when the user remains inactive without interacting with the server (i.e., with no service request that is submitted after the handle has been allocated or after the response to a previous service request has been received) for a period longer than a predefined time-out Lh (such as 15-30 min.). For example, the figure shows four handles H1-H4 that last from a start time S1-S4 to an end time E1-E4, respectively.

The server can manage a maximum number of handles concurrently (for example, of the order of some hundreds); once this maximum number of handles has been reached, no further handles can be allocated for new users that wish to exploit the service. Assuming - in the very simplified example shown in the figure - that the maximum number of handles is four, this limit is reached at the time S4. Therefore, any service requests by new users after the time S3 would be refused, with the server that would remain unavailable (for the new users) until one of the handles H1-H4 is released; in the example at issue, this unavailability time Ti would last until the time E2 (when the handle H2 is released).

In order to mitigate this problem, in the solution according to an embodiment of the present invention (as described in detail in the following) a privileged use of the server is granted to each (active) user; however, the privileged use is limited according to the actual use of the server that has been made by the user. For example, this limit is defined by a credit that is reduced every time the user receives a response to a service request submitted to the server. The credits are used to balance the exploitation of the service when no handle is available (because their maximum number has been reached). In this case, if a service request is submitted by a new user with the corresponding credit that is not exhausted, the server forces the release of a handle currently allocated to another user, which released handle is then allocated to the new user (with the service request that is instead refused as usual otherwise).

The above-mentioned privileged use (for forcing the release of the handles) strongly increases the availability of the server; the advantage is particularly evident in services (such as of the DAM type), which should guarantee their exploitation to the largest possible number of different users in any situation (for example, even in the case of a peak of requests).

However, the limit being set for this privileged use (by the credit reducing over time) avoids any excessive overload of the server, which would be caused by continual releases of the handles.

In other words, the proposed solution provides an excellent tradeoff between the opposed requirements of high availability of the server and low overhead thereof.

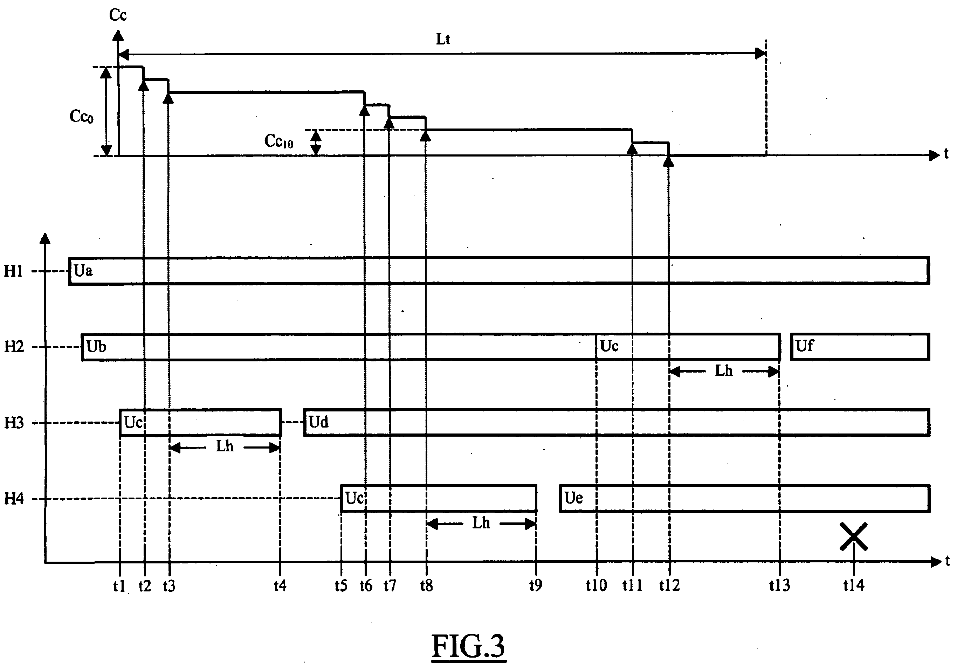

For example, as shown in FIG.3, let us consider a situation wherein the handle H1 is allocated to a user Ua and the handle H2 is allocated to a user Ub. At the time t1, a new user Uc submits a connection request for starting exploiting the service. In response thereto, the server performs a handshaking procedure to verify the identity of the user Uc and his/her authorization; assuming that the handshaking procedure succeeds, the user Uc is granted the required access to the server.

For this purpose, the server creates a new access token Kc for the user Uc. The token Kc is used to access a profile, which stores the personal data of the user Uc that is collected during the handshaking procedure. The profile also includes the current value of the credit Cc that is assigned to the user Uc; the credit Cc is initialized to a starting value Cc₀ (such as of the order of some tens).

The server immediately allocates a handle for the token Kc if it is possible (with this information that is saved in the corresponding profile). In the situation at issue, the handle H3 is available so that it can be allocated to the token Kc; for this purpose, the context information of the handle is initialized with the personal data of the user Uc that is loaded from the profile of the token Kc. This additional feature tries to make a handle ready for a first service request, which is very likely to be submitted in a short time by a user that has just been granted the access to the server.

Whenever the user Uc submits service requests to the server, the service requests are processed by means of the handle H3 (associated with his/her token Kc), which returns corresponding responses to the user Uc (at the time t2 and t3 in the example at issue); the return of every response to the user Uc also causes the reduction by one of the corresponding credit Cc. The handle H3 is then released at the time t4, since the time-out Lh has been reached without the submission of any further service request by the user Uc; however, the context information of the handle H3 is saved into the profile of the token Kc before being discarded. The same handle H3 is then allocated to a further user Ud.

The time-out mechanism for the handles reduces the probability of contention on the server, since the handles are released when they should not be necessary any longer (for example, because the corresponding users have already obtained all the desired responses from the server but have forgotten to close the sessions). In this way, the need of implementing the above-mentioned procedure for forcing the release of the handles is reduced.

Later on (at the time t5), the user Uc submits another service request to the server. In this case, no handle is allocated for his/her token Kc. Therefore, the server tries to allocate a handle for the token Kc; in the situation at issue, the handle H4 is available so that it can be allocated to the token Kc. For this purpose, the context information of the user Uc is reloaded from the profile of the token Kc. In this way, the required information is immediately available (without any overload of the server for its collection). As above, the user Uc submits service requests that are processed by means of the handle H4; corresponding responses are returned to the user Uc (at the time t6, t7 and t8 in the example at issue), with the credit Cc that is reduced accordingly. The handle H4 is then released at the time t9 when the time-out Lh is reached, with the context information of the handle H4 that is saved into the profile of the token Kc. The same handle H4 is then allocated to a further user Ue.

In this way, the token Kc is completely de-coupled from the handles H1-H4 (since different handles H1-H4 can be used for the same token Kc over time). In any case, the context information saved in the profile of the token Kc (which is loaded for the corresponding handle at its creation) provides continuity between different service requests that are submitted to the server (thereby avoiding the startup costs that would instead being required to recollect the context information by means of the handshaking procedure).

Later on (at the time t10), the user Uc submits another service request to the server. In this case as well, no handle is allocated for his/her token Kc; however, no further handle is now available (since the maximum number of four has already been reached). Nevertheless, since the credit Cc is not exhausted, one of the handles H1-H4 is released and allocated to the token Kc; in the example at issue, the handle H2 (currently allocated to the user Ub) is released and allocated to the token Kc.

Preferably, the handle to be released is selected according to the credits of the corresponding users; particularly, the server releases the handle whose user has the lowest credit. This additional feature avoids penalizing the users that have just been granted the access to the server.

As above, the user Uc submits service requests that are processed by means of the handle H2; corresponding responses are returned to the user Uc (at the time t11 and t12 in the example at issue), with the credit Cc that is reduced accordingly - down to become zero at the time t12. The handle H2 is then released at the time t13 when the time-out Lh is reached, with the context information of the handle H2 that is saved into the profile of the token Kc. The same handle H2 is then allocated to a further user Uf.

Later on (at the time t14), the user Uc submits another service request to the server. In this case as well, no handle is allocated for his/her token Kc and no further handle is available. However, the credit Cc is now exhausted; therefore, the processing of the service request by the server is refused as usual - as denoted by a cross in the figure.

It is then evident that the proposed credits are not used to enable/disable the access to the server by the corresponding users (as in the prepaid credits known in the art, wherein each user is allowed to access the server only until his/her credit is not exhausted). Conversely, the credits are completely opaque to the server when one or more handles are still available (with the access to the server that can be either free or controlled by means of any payment technique). The credits are instead taken into account to balance the access to the server only when no handle is available.

Preferably, as shown in the figure, the token Kc expires after a predefined time-out Lt - typically far longer than the time-out Lh for the handles (for example, of the order of some days). In this case, the token Kc is released; this involves discarding the corresponding profile and releasing the handle associated thereto (if any). For this purpose, it is possible to store a timestamp indicative of the creation time of the token Kc into its profile. Any further service request that is submitted after the expiration of the token Kc is then refused, with the user Uc that can request to re-access the server by repeating the handshaking procedure described above - for verifying his/her identity and authorization again, and then creating a new token for the same user Uc. This additional feature increases the security of the proposed solution, since it limits the access that has been granted to the server temporally (for the same verification of each user) .

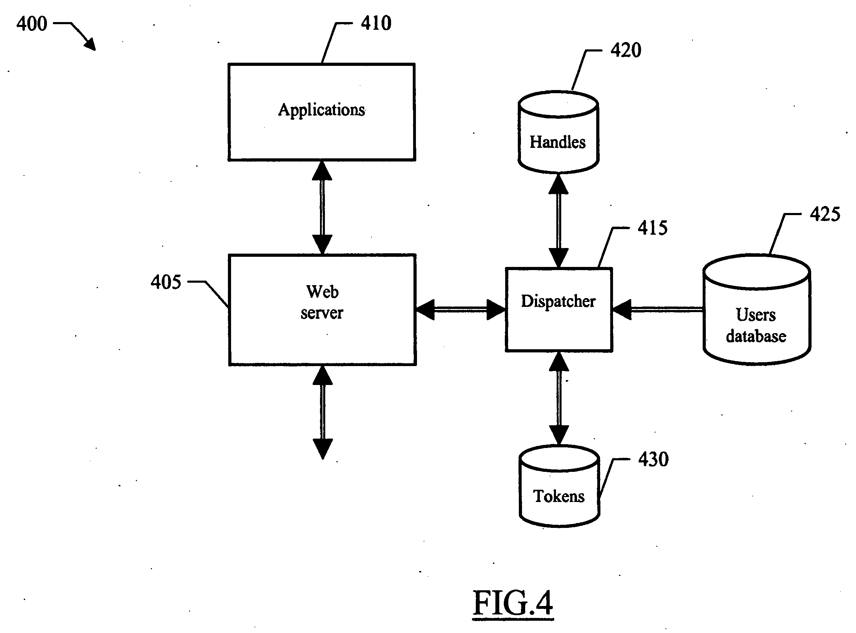

Moving to FIG.4, the main software components that can be used to implement the above-described solution are denoted as a whole with the reference 400. The information (programs and data) is typically stored on the hard-disk and loaded (at least partially) into the working memory of the server when the programs are running, together with an operating system and other application programs (not shown in the figure). The programs are initially installed onto the hard disk, for example, from CD-ROM.

In detail, a web server 405 is used to interact with the server by the different users - through browsers running on the corresponding clients (not shown in the figure). Particularly, the web server 405 receives (connection/service) requests for the services offered by one or more web applications 410 (of the DAM type in the example at issue), and it returns the corresponding responses.

The web server 405 interfaces with a dispatcher 415, which manages all the sessions on the server. For this purpose, the dispatcher 415 controls a repository 420, which stores each allocated handle with the corresponding context information. A user database 425, which includes the personal data of all the users that are authorized to access the server, is exploited by the dispatcher 415 to verify each user during the handshaking procedure. The dispatcher 415 also controls a further repository 430, which stores each token in use with the corresponding profile.

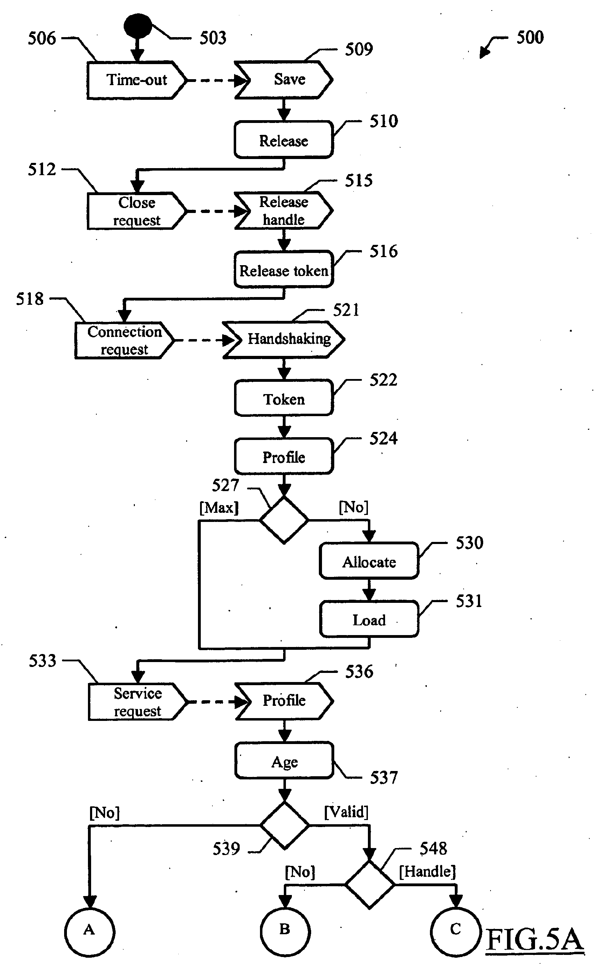

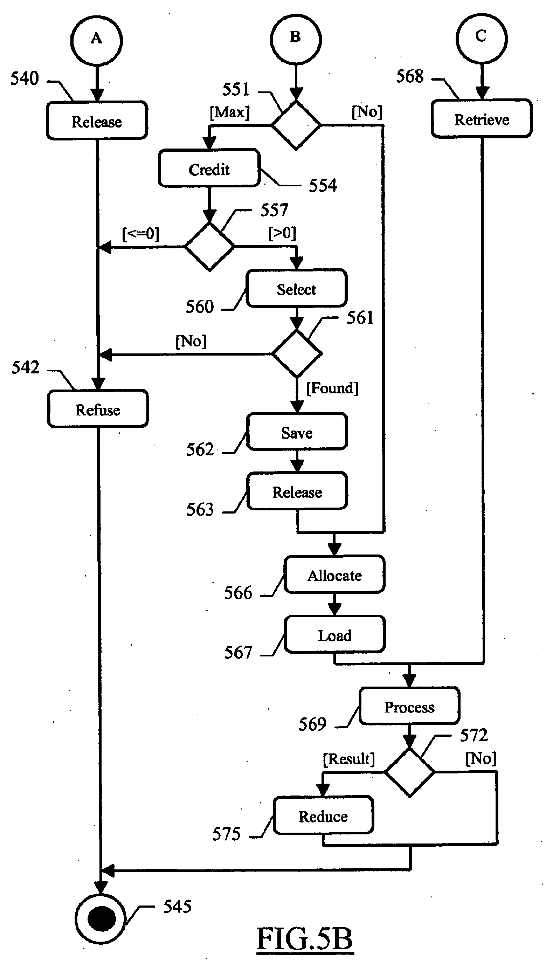

Considering now FIG.5A-5B, the logic flow of an exemplary process that can be implemented in the above-described system (to control the accesses to the server) is represented with a method 500. The method begins at the black start circle 503 and then passes to block 506 whenever the time-out Lh for any handle expires. For example, this result is achieved by means of a counter for each handle; the counter continuously runs in the background, but it is reset whenever a service request for the handle is submitted by the corresponding user. When the time-out expires, the context information of the handle is saved into the profile of the corresponding token at block 509. The handle is then released at block 510 (with its context information that is discarded).

With reference to block 512, the method passes to block 515 whenever the server receives a request from a user for closing the corresponding access (by passing the token as a parameter). In response thereto, the handle associated with the token in the corresponding profile (if any) is released, by discarding its context information. The method proceeds to block 516, wherein the token can now be released, with the corresponding profile that is discarded.

Moving to block 518, the server receives a connection request from a new user. The flow of activity then passes to block 521, wherein a handshaking procedure is performed to verify the identity of the user and his/her authorization. Assuming that the handshaking procedure succeeds, the server at block 522 creates a new token for the user; at the same time, the corresponding credit is initialized to the starting value and the timestamp of the token is set to the current time. Continuing to block 524, the corresponding profile is populated with the personal data of the user (collected during the handshaking procedure).

A test is now performed at block 527 to determine whether any handle is available (since their maximum number has not been reached yet). If so, a handle is allocated for the token at block 530 (with an indication of the allocated handle that is added to the corresponding profile). Continuing to block 531, the context information of the handle is initialized with the personal data of the user that is loaded from the profile of the token. The method then descends into block 533; the same point is also reached directly from block 527 when no handle is available.

Every time the server at .block 533 receives a service request from a generic user (together with the assigned token), the flow of activity passes to block 536; in this phase, the server retrieves the profile of the received token. The time elapsed from the creation of the token (as indicated by the time-stamp in its profile) is then compared with the time-out Lt at block 537. The status of the token is now verified at block 539. If the token has expired (since the time elapsed from its creation exceeds the time-out Lt), the server at block 540 releases the token (together with the possible handle associated therewith). The service request is then refused at block 542 (with a corresponding error message that is returned to the user). The method ends at the concentric white/black stop circles 545.

Conversely, when the token is still valid the server verifies at block 548 whether a handle is associated with the token (as indicated in its profile). If no handle is found, a test is performed at block 551 to determine whether the maximum number of handles has been reached. If so, the server at block 554 retrieves the credit of the user from the profile of the token. The method then continues to block 557, wherein the server verifies the credit remaining to the user. If the credit is exhausted (i.e., lower than or equal to zero), the service request is again refused at block 542 (with the method that ends at the stop circles 545).

On the contrary (i.e., when the credit is higher than zero), the handle allocated to the user with the lowest credit is selected at block 560. Preferably, the selection is restricted to the handles associated with users having the inactivity time higher than a grant period (lower than the time-out Lh). This grant period represents the typical maximum inactivity time of the users that are still alive - since they have not obtained yet all the desired responses from the server (so that further service requests are likely to be submitted later on); for example, the inactivity time below the grant period may correspond to the choice of the service requests to be submitted, to the playback of the received digital assets, and the like. More details about this feature may be found in the co-pending patent application No.EP07111069.7 filed on 26 June 2007 (the entire disclose of which is herein incorporated by reference). A test is then made at block 561 to determine whether a handle has been found. If not, the service request is again refused at block 542 (with the method that ends at the stop circles 545). Conversely, the context information of the selected handle is saved into the profile of the corresponding token at block 562. The selected handle is then released at block 563 (with its context information that is discarded).

The flow of activity now descends into block 566; the same point is also reached directly from block 551 when one or more handles are still available (since their maximum number has not been reached yet). In this phase, a new handle is allocated for the token (with an indication of the allocated handle that is added to the corresponding profile). Continuing to block 567, the context information of the handle is directly loaded from the profile of the token. The method then descends into block 569. Referring back to block 548, when a handle is already associated with the token, the corresponding context information is retrieved at block 568. In this case as well, the method then descends into block 569.

At this point, the service request that was submitted by the user is processed; for this purpose, the server exploits the context information of the corresponding handle, which is then updated accordingly (if necessary).

The flow of activity then branches at block 572 according to the outcome of the service request. If the processing of the service request was successfully (with the corresponding result that was returned to the user), the credit of the user is reduced at block 575 in the profile of the token. The method then ends at the stop circles 545; the same point is also reached directly from block 572 otherwise.

Naturally, in order to satisfy local and specific requirements, a person skilled in the art may apply to the solution described above many logical and/or physical modifications and alterations. More specifically, although the present invention has been described with a certain degree of particularity with reference to preferred embodiment(s) thereof, it should be understood that various omissions, substitutions and changes in the form and details as well as other embodiments are possible. Particularly, the proposed solution may even be practiced without the specific details (such as the numerical examples) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any disclosed embodiment of the invention may be incorporated in any other embodiment as a matter of general design choice.

Particularly, the proposed solution lends itself to be implemented with an equivalent method (by using similar steps, removing some steps being non-essential, or adding further optional steps); moreover, the steps may be performed in a different order, concurrently or in an interleaved way (at least in part).

Even though in the preceding description reference has been made to a credit (consisting of an integer value that is decreased every time a response is returned to the user), this is not to be intended in a limitative manner. For example, similar considerations apply if a counter is used for the number of times that a response is returned to the user (with the credit that exhausts when the counter reaches a predefined value); more generally, any other limit for a privileged use of the server may be taken into account - for example, based on the number of service requests that have been processed (independently of their outcome), on a connection time, on a consumption of the service, and the like. Moreover, the proposed credit may be granted either to all the users indiscriminately or only to a subset thereof.

Similar considerations apply if the maximum number of handles is defined in another way (for example, changing dynamically during the day). However, the proposed solution lends itself to be applied in response to the detection of different critical conditions (such as when the time required to find the server available exceeds an acceptable value, or when the quality of the service falls below a limit to be guaranteed).

In different embodiments of the invention (when other critical conditions are detected), there is not excluded the possibility of forcing the release of two or more handles (when a further service request is received from a user whose credit is not exhausted). In any case, the handle to be released may be selected according to different criteria - even independently of the corresponding credit; for example, it is possible to release the handle associated with the user having the longest inactivity time.

In an alternative implementation of the invention, the forced release of the handles may be unconditioned, so that every service request that is submitted by a new user with the credit that is not exhausted (after reaching the maximum number of handles) is always served.

Although the proposed solution has been described with reference to the SOA services (and especially of the DAM type), this is not to be interpreted in a limitative manner. Indeed, similar considerations apply to other SOA services (for example, for online instant messaging applications), or to services based on any other architecture (for example, conforming to the CORBA specification). More generally, the proposed solution lends itself to be applied to manage the access to any other logical and/or physical shared resource (such as files, databases, disks, printers, scanners, and the like) by whatever logical and/or physical exploiter entities (such as operating systems, software applications, routers, switches, and the like).

Likewise, any other context information may be used to provide the required service in any other kind of working sessions (with equivalent handles for their management). In any case, nothing prevents applying the same solution to services of the stateless type.

Moreover, it is possible to monitor the (in)activity of each user in a different way; for example, the inactivity time may be measured in another way (such as by filtering sporadic service requests), or it may be replaced by any similar indicator (such as equal to the incremental inactivity time of the user during the whole access to the server). However, nothing prevents maintaining each handle allocated, independently of the activity of the corresponding user, until it is not required by other users after reaching the maximum number of handles.

Alternatively, the forced release of the handles may be conditioned in any other way (for example, by restricting it to the users having credits lower than the one of the new user).

Likewise, it is possible to collect the context information with any other procedure (such as requiring the user to enter his/her personal data); the context information may be stored in any equivalent structure (even of the distributed type). Moreover, it should be noted that the tokens may be replaced with any equivalent element for authorizing the exploitation of the service (for example, by simply flagging an identifier of each authorized user accordingly on the server). Likewise, the profiles may be replaced with any equivalent structures, or they may be maintained synchronized with the context information of the corresponding handles in real-time (and not only when the handles are released). In any case, different implementations only working at the level of the handles are not excluded.

The feature relating to the attempt of allocating a handle immediately for each fresh token is not strictly necessary.

In an alternative embodiment of the invention, the tokens may be released according to any other policy (for example, when the consumption of the service reaches a predefined limit); in any case, the use of tokens without any expiration is not excluded in specific applications (for example, without strict security requirements).

Similar considerations apply if the program (which may be used to implement each embodiment of the invention) is structured in a different way, or if additional modules or functions are provided; likewise, the memory structures may be of other types, or may be replaced with equivalent entities (not necessarily consisting of physical storage media). In any case, the program may take any form suitable to be used by or in connection with any data processing system, such as external or resident software, firmware, or microcode (either in object code or in source code - for example, to be compiled or interpreted). Moreover, it is possible to provide the program on any computer-usable medium; the medium can be any element suitable to participate in containing, storing, communicating, propagating, or transferring the program. For example, the medium may be of the electronic, magnetic, optical, electromagnetic, infrared, or semiconductor type; examples of such medium are fixed disks (where the program can be pre-loaded), removable disks, tapes, cards, wires, fibers, wireless connections, networks, broadcast waves, and the like. In any case, the solution according to an embodiment of the present invention lends itself to be implemented with a hardware structure (for example, integrated in a chip of semiconductor material), or with a combination of software and hardware.

Moreover, the proposed service may be implemented by any equivalent service provider, such as consisting of a cluster of servers. In any case, the solution according to the present invention also lends itself to be applied in a classic environment that is not service-based.

The proposed method may be carried out on a system having a different architecture or including equivalent units (for example, based on a local network). Moreover, each computer may include similar elements (such as cache memories temporarily storing the programs or parts thereof to reduce the accesses to the mass memory during execution); in any case, it is possible to replace the computer with any code execution entity (such as a PDA, a mobile phone, and the like), or with a combination thereof (such as a multi-tier server architecture, a grid computing infrastructure, and the like).

## Claims

1. A method carried out by a server for balancing accesses to active clients to use a service offered by said server, said server granting access to the service to clients by assigning a client maximum use value of the service, measuring a client use indicator of said service and, if detecting a lack of resources on the server to grant new accesses, releasing access to the client having a use indicator which is the closest to the maximum use value in order to grant access to a new active client, said method comprising:
- receiving (518) a connection request for starting exploiting the service by an active client,
- collecting (521) a context information of the active client,
- creating (522) a token for authorizing the active client to exploit the service, the token being associated with the maximum use value of the service assigned to said active client, and
- storing (524) the context information of the active client into a profile associated with the token,
wherein the step of granting the access to the new active client (566-567) includes:
- associating (566) a new handle with the corresponding token, and
- retrieving (567) the corresponding context information from the profile of the corresponding token,
wherein the step of detecting a lack of resources on the server to grant new accesses includes receiving the connection request after reaching the maximum number of handles,
and wherein the step of releasing the access granted to a client (554-563) includes:
- saving (562) each corresponding context information into the profile of the corresponding token
- releasing the corresponding handle.

2. The method (500) according to claim 1, further including, in response to assignment of the client maximum use value of the service with each active client (518-524) when there is no lack of resources on the server, the step of:
granting (530-531) the access to the active client.

3. The method (500) according to claim 1 or 2, further including the steps of:
monitoring (506) an activity of each enabled client, and
releasing (509-510) each handle when an inactivity indicator of the corresponding enabled client reaches a first threshold.

4. The method (500) according to any one of claims 1 to 3 wherein the step of releasing access to the client having a use indicator which is the closest to the maximum use value, includes a previous step of:
restricting (560) the releasing to the clients having an inactivity exceeding a second threshold preceding the first threshold.

5. The method (500) according to claim 1 or 4, further including the step of:
releasing (540) the token after reaching a use limit.

6. A computer program (400) for performing the method (500) of any claim from 1 to 5 when the computer program is executed on a data processing system (105).

7. A system (105) including means (400) for performing the steps of the method (500) according to any claim from 1 to 5.

## Patentansprüche

1. Von einem Server ausgeführtes Verfahren zum Ausgleichen der Zugriffe auf aktive Clients, um einen von dem Server angebotenen Dienst zu nutzen, wobei der Server den Zugriff auf den Dienst für Clients durch Zuweisen eines größtmöglichen Dienst-Nutzungswerts, Messen eines Client-Nutzungsanzeigers des Dienstes und, wenn ein Mangel an Betriebsmitteln auf dem Server zum Gewähren neuer Zugriffe erkannt wird, Freigeben des Zugriffs auf den Client mit einem Nutzungsanzeiger gewährt, der dem größtmöglichen Nutzungswert am nahesten ist, um den Zugriff für einen neuen aktiven Client zu gewähren, wobei das Verfahren umfasst:
- Empfangen (518) einer Verbindungsanforderung zum Beginnen der Nutzung des Dienstes durch einen aktiven Client,
- Erfassen (521) von Kontextdaten des aktiven Client,
- Erzeugen (522) eines Token zum Erteilen einer Berechtigung des aktiven Clients für ein Nutzen des Dienstes, wobei der Token dem größtmöglichen Nutzungswert des Diensts zugehörig ist, der dem aktiven Client zugewiesen ist, und
- Speichern (524) der Kontextdaten des aktiven Clients in einem Profil, das dem Token zugehörig ist,
wobei der Schritt des Gewährens des Zugriffs für den neuen aktiven Client (566 bis 567) beinhaltet:
- Zuordnen (566) einer neuen Kennung zu dem entsprechenden Token, und
- Abrufen (567) der entsprechenden Kontextdaten aus dem Profil des entsprechenden Token,
wobei der Schritt des Erkennens eines Mangels an Betriebsmitteln auf dem Server zum Gewähren neuer Zugriffe ein Empfangen der Verbindungsanforderung nach dem Erreichen der Höchstanzahl von Kennungen beinhaltet,
und wobei der Schritt des Freigebens des Zugriffs, der einem Client gewährt wird (554 bis 563), beinhaltet:
- Speichern (562) aller entsprechenden Kontextdaten in dem Profil des entsprechenden Token
- Freigeben der zugehörigen Kennung.

2. Verfahren (500) nach Anspruch 1, das ferner in Reaktion auf eine Zuweisung des größtmöglichen Dienst-Nutzungswerts zu jedem aktiven Client (518 bis 524), wenn kein Mangel an Betriebsmitteln auf dem Server besteht, den Schritt beinhaltet:
Gewähren (530 bis 531) des Zugriffs für den aktiven Client.

3. Verfahren (500) nach Anspruch 1 oder 2, das ferner die Schritte beinhaltet:
Überwachen (506) einer Aktivität jedes aktivierten Clients und Freigeben (509 bis 510) jeder Kennung, wenn ein Inaktivitätsanzeiger des entsprechenden aktivierten Clients einen ersten Schwellenwert erreicht.

4. Verfahren (500) nach einem der Ansprüche 1 bis 3, wobei der Schritt des Freigebens des Zugriffs auf den Client mit einem Nutzungsanzeiger, der dem größtmöglichen Nutzungswert am nahesten ist, einen vorangehenden Schritt beinhaltet:
Einschränken (560) des Freigebens auf die Clients mit einer Inaktivität, die einen zweiten Schwellenwert überschreitet, der vor dem ersten Schwellenwert liegt.

5. Verfahren (500) nach Anspruch 1 oder 4, das ferner den folgenden Schritt beinhaltet:
Freigeben (540) des Token nach dem Erreichen einer Nutzungsgrenze.

6. Computerprogramm (400) zum Ausführen des Verfahrens (500) nach einem der Ansprüche 1 bis 5, wenn das Computerprogramm auf einem Datenverarbeitungs-System (105) ausgeführt wird.

7. System (105), das Mittel (400) zum Ausführen der Schritte des Verfahrens (500) nach einem der Ansprüche 1 bis 5 beinhaltet.

## Revendications

1. Procédé exécuté par un serveur pour équilibrer des accès à des clients actifs afin d'utiliser un service offert par ledit serveur, ledit serveur accordant l'accès au service à des clients en assignant une valeur d'utilisation maximale de client, en mesurant un indicateur d'utilisation client dudit service et, en cas de détection d'un manque de ressources sur le serveur pour accorder de nouveaux accès, libérer l'accès au client ayant un indicateur d'utilisation qui est le plus proche de la valeur d'utilisation maximale de manière à accorder l'accès à un nouveau client actif, ledit procédé comprenant de :
- recevoir (518) une demande de connexion pour démarrer l'exploitation du service par un client actif,
- collecter (521) une information de contexte du client actif,
- créer (522) un jeton pour autoriser le client actif à exploiter le service, le jeton étant associé à la valeur d'utilisation maximale du service assigné audit client actif, et
- mémoriser (524) l'information de contexte du client actif dans un profil associé au jeton,
dans lequel l'étape consistant à accorder l'accès au nouveau client actif (566-567) inclut de :
- associer (566) un nouveau pointeur au jeton correspondant, et
- extraire (567) l'information de contexte correspondante du profil du jeton correspondant,
dans lequel l'étape de détection d'un manque de ressources sur le serveur pour accorder de nouveaux accès inclut de recevoir la demande de connexion après que le nombre maximal de pointeurs a été atteint,
et dans lequel l'étape de libération de l'accès accordé à un client (554 à 563) inclut de :
- sauvegarder (562) chaque information de contexte correspondante dans le profil du jeton correspondant,
- libérer le pointeur correspondant.

2. Procédé (500) selon la revendication 1, incluant en outre, en réponse à l'assignation de la valeur d'utilisation maximale de client du service à chaque client actif (518 524) quand il y a un manque de ressources sur le serveur, l'étape consistant à :
accorder (530 à 531) l'accès au client actif.

3. Procédé (500) selon la revendication 1 ou 2, incluant en outre les étapes consistant à :
surveiller (506) une activité de chaque client activé, et
libérer (509 à 510) chaque pointeur quand un indicateur d'inactivité du client activé correspondant atteint un premier seuil.

4. Procédé (500) selon l'une quelconque des revendications 1 à 3, dans lequel l'étape de libération d'accès au client ayant un indicateur d'utilisation qui est le plus proche de la valeur d'utilisation maximale, inclut une étape précédente consistant à :
restreindre (560) la libération aux clients ayant une inactivité dépassant un second seuil précédant le premier seuil.

5. Procédé (500) selon la revendication 1 ou 4, incluant en outre l'étape consistant à :
libérer (540) le jeton après qu'une limite d'utilisation a été atteinte.

6. Programme informatique (400) pour mettre en oeuvre le procédé (500) selon l'une quelconque des revendications 1 à 5 quand le programme informatique est exécuté sur un système de traitement de données (105).

7. Système (105) incluant un moyen (400) pour mettre en oeuvre les étapes du procédé (500) selon l'une quelconque des revendications 1 à 5.
